Europäisches Patentamt

European Patent Office

Office européen des brevets

(19)

(11) Publication number: **0 311 722 B1**

# EUROPEAN PATENT SPECIFICATION

(45) Date of publication of patent specification: **18.09.91**

(51) Int. Cl.⁵: **C08F 255/02**, C09J 151/06,
//(C08F255/02,230:08)

(21) Application number: **87402292.4**

(22) Date of filing: **14.10.87**

(54) **Silane-modified ethylene copolymer, process for producing the same, and adhesive comprising the same.**

(43) Date of publication of application:
**19.04.89 Bulletin 89/16**

(45) Publication of the grant of the patent:
**18.09.91 Bulletin 91/38**

(84) Designated Contracting States:
**BE CH ES IT LI NL SE**

(56) References cited:
**BE-A- 898 893
FR-A- 2 238 588
US-A- 3 663 649**

**PATENT ABSTRACTS OF JAPAN, vol. 9, no.
309 (C-318)[2032], 05 December 1985**

(73) Proprietor: **CRAY VALLEY SA
Tour Total, 24 cours Michelet
F-92800 Puteaux(FR)**

(72) Inventor: **Ohmae, Tadayuki
6-10-2-409, Inagehigashi
Chiba-shi Chiba(JP)**
Inventor: **Mashita, Kentaro
4-9-3, Aobadai
Pchihara-shi Chiba(JP)**
Inventor: **Furukawa, Kazunori
1-11-1, Aobadai Midori-ku
Yokohama-shi Kanagawa(JP)**
Inventor: **Kawakita, Toshio
2-1, Kuwata-cho
Ibaraki-shi Osaka(JP)**

(74) Representative: **Dubost, Thierry
CRAY VALLEY Service Propriété Industrielle
Parc Technologique ALATA BP 22
F-60550 Verneuil-en-Halatte(FR)**

## Description

The present invention relates to a silane-modified ethylene copolymer, a process for producing the same, and an adhesive comprising the same. More particularly, the present invention relates to a silane-modified ethylene copolymer prepared by graft copolymerizing a trialkoxyvinylsilane to an ethylene/(meth)-acrylic acid ester/maleic anhydride copolymer in the presence of a peroxide catalyst, as well as a process for producing the silane-modified ethylene copolymer and an adhesive comprising the same.

Techniques have been known for graft modifying polyolefins such as polyethylene or polypropylene with unsaturated carboxylic acids (e.g., acrylic acid) or anhydrides thereof (e.g., maleic anhydride) to introduce polar groups therein in order to impart adhesion between different kinds of substrates such as metals, glass, polar high-molecular weight materials and polyolefins, as described for example in Japanese Patent Publication Nos. 18393/62 and 32654/77.

It is also known to impart adhesion by copolymerizing $\alpha$-olefins such as ethylene with polar monomers such as glycidyl (meth)acrylate, as described, for example, in Japanese Patent Publication No. 27527/71 and Japanese Patent Publication No. 11388/73.

Though these graft modified polyolefins or copolymers exhibit fairly good initial adhesion to metals or glass, they show the drawback that their adhesion is appreciably deteriorated in a short period of time in an atmosphere where water is present. For example, with respect to the adhesion to glass, in packaging water-containing foodstuff, good maintenance of water-resistant adhesion between glass containers and their metallic lids is required, but the above-described graft modified polyolefins or copolymers cannot meet such a request.

Furthermore, adhesives used in the area of food packaging are often required to show good adhesion to metals, polar high-molecular weight materials or polyolefins in addition to the above-described maintenance of water-resistant adhesion.

On the other hand, in order to avoid a significant decrease in adhesion to glass is an atmosphere where water is present, it has been known to graft modify an ethylene-vinyl acetate copolymer with an unsaturated organosilane (see Processings of the 23rd Annual Meeting of the Adhesion Society of Japan, pp.118, June 12, 1985). However, such an ethylene-vinyl acetate copolymer graft modified with an unsaturated organosilane does not show satisfactory adhesion to metals or plastics and cannot therefore be used for the manufacture of laminates such as glass/metal laminates and glass/plastic laminates.

An object of the present invention is to provide a silane-modified ethylene copolymer which is excellent not only in adhesion to metals, glass, polar high-molecular weight materials or polyolefins but also in maintenance of water-resistant adhesion to glass. Another object of the present invention is to provide a process for producing the silane-modified ethylene copolymer. A further object of the present invention is to provide an adhesive comprising the above-described silane-modified ethylene copolymer.

First the present invention relates to a silane-modified ethylene copolymer, prepared by graft copolymerizing from 0.1 to 10 parts by weight of an alkoxyvinyl silane to 100 parts by weight of an ethylene/(meth)acrylic acid ester/maleic anhydride copolymer in the presence of a peroxide catalyst.

The ethylene/(meth)acrylic acid ester/maleic anhydride copolymer which can be used in the present invention contains from 0 to 15 mol % of a (meth)acrylic acid ester unit and from 0.2 to 3 mol % of a maleic anhydride unit. This copolymer can be prepared by any known radical copolymerization methods, such as disclosed in British Patent No. 2,091,745, United States Patent No. 4,617,366 or United States Patent No. 4,644,044.

As the copolymer, those having a number average molecular weight of from 10,000 to 40,000 are advantageously used. The number average molecular weight can be obtained by gel permeation chromatography. For example, a measurement is first made with trichlorobenzene which is used as a solvent at a column oven temperature of $135^\circ$C, and the measured value is converted to the number average molecular weight on the basis of a calibration curve prepared with monodisperse polystyrene. The copolymer preferably has a melt flow index of about 1 to 200 g/10 minutes.

Suitable examples of the alkoxyvinyl silane which can be used in the present invention include trimethoxyvinyl silane, triethoxyvinyl silane, tris(methoxyethoxy)vinylsilane, divinyldimethoxysilane, and vinylmethyldimethoxysilane and they can be used either alone or in admixture.

The amount of the alkoxyvinyl silane which is grafted to the ethylene/(meth)acrylic acid ester/maleic anhydride copolymer is within the range from 0.1 to 10 parts by weight and preferably from 0.5 to 5 parts by weight based on 100 parts by weight of the copolymer. If less than 0.1 part by weight of the trialkoxyvinyl silane is grafted to the copoolymer, the resulting graft copolymer cannot retain its initial adhesion strength for a sufficient period of time in an atmosphere where water is present. On the other hand, if more than 10 parts by weight of the alkoxyvinyl silane is used, side reactions occur extensively in

2

addition to the intended graft copolymerization, and molded articles from the resulting graft copolymer are likely to contain a large amount of the so-called "fish-eye" defects, whereby it becomes practically difficult to use them in the film-like state.

Examples of the peroxide which can be used as the catalyst in the present invention include dicumylperoxide, di-t-butyl peroxide, 2,5-di(peroxybenzoate)-hexyne-3,1,3-bis(t-butylperoxyisopropyl)-benzene, peroxylauryl, and 2,5-dimethyl-2,5-di(t-butylperoxy)hexane. The choice of the peroxide catalyst should be made on the basis of the characteristics of the ethylene/(meth)acrylic acid ester/maleic anhydride copolymer and the modification desired. The peroxide catalyst is preferably used in an amount of from 0.05 to 0.3 part by weight based on 100 parts by weight of the ethylene/(meth)acrylic acid ester/maleic anhydride copolymer.

The silane-modified ethylene copolymer according to the present invention can preferably be produced by melt kneading the necessary ingredients in a kneading apparatus that is commonly employed in the manufacture of olefinic polymer compositions, such as a mixing roll, a kneader, a Banbury mixer, a single-screw extruder or twin screw extruder, at a temperature at least 20°C higher than the melting point of the starting copolymer. A homogeneous composition can be obtained by previously dry blending the necessary ingredients with a mixing apparatus such as a Henschel mixer, a ribben blender, or a tumbler before the melt kneading.

The silane-modified ethylene copolymer of the present invention can also be produced in accordance with any other known modification methods such as a solution modification method as described, for example, in Japanese Patent Publication No. 15422/69 or a slurry modification method as described, for example, in Japanese Patent Publication No. 18144/68.

The number average molecular weight of the thus produced silane-modified ethylene copolymer varies with several factors such as the molecular weight of the starting ethylene(meth)acrylic acid ester/maleic anhydride copolymer and the operating conditions used, but it usually ranges from about 12,000 to 36,000. The silane-modified ethylene copolymer generally has a melt flow index within the range of about 0.1 to 30 g/10 minutes.

The silane-modified ethylene copolymer of the present invention is useful as an adhesive since it exhibits excellent adhesion to various substrates. Thus laminates, coated articles and various other composites which are excellent not only in adhesion to metals, glass, polyolefins or polar high-molecular weight materials but also in maintenance of water-resistant adhesion to glass can be manufactured with the silane-modified ethylene copolymer of the present invention by using any known processing technique.

The silane-modified ethylene copolymer of the present invention, if used as an adhesive, can be processed into a film which is then placed between the parts to be assembled and heated to a temperature not lower than the softening point of the resin while applying a pressure. In this case, the film processed from the copolymer preferably has a thickness of from 10 to 100 μm.

The silane-modified ethylene copolymer of the present invention can also be used in a solution state upon dissolution in a solvent. As the solvent, trichloroethylene, toluene, xylene and heptane are preferably used, and the concentration of the copolymer in the solution is preferably from 1 to 20 % by weight. The copolymer in solution is then applied to the parts to be coated, then the solvent is evaporated, thus forming a thin film of about 1 to 10 μm thick.

As a method of use the adhesive of the present invention, for example when the manufacture of laminates or coated articles is concerned, there can be applied extrusion coating, dry lamination, thermocompression, powder coating, and combinations of these techniques, and the choice of a suitable method should be made in consideration of the use of such laminates or coated articles.

The following examples are provided for the purpose of further illustrating the present invention, without any intention to limit the scope thereof.

In the examples, various properties were measured by the following methods:

(a) MI (melt flow index):

Measured in accordance with JIS K 6760 (190°C under a load of 2.16 kg).

(b) Adhesion strength:

(i) Adhesion to glass:

A film (50 μm in thickness) of a silane-modified ethylene copolymer that had been extruded from an extruder (20 mm in diameter) through a T die (200 mm in width) at 200°C was superposed on a glass slide

3

for use with a microscope (1 mm$^T$ x 76 mm$^L$ x 26 mm$^W$; a product of Matsunami Glass Industry, Ltd.), and an aluminum foil having a thickness of 40 μm (a product of Sumikei Aluminum Foil Co., Ltd.) was further superposed on the copolymer film. Thereafter, the individual layers were heat-sealed at a pressure of 0.98 bar (1 kg/cm$^2$)G for 5 seconds using a heat sealer to prepare a laminate sample. The heat sealing bar in contact with the glass slide was held at ambient temperature while the heat sealing bar in contact with the aluminum foil was held at 220°C.

A slit having a width of 1 cm was provided through the aluminum foil into the underlying silane-modified ethylene copolymer film with a knife. The laminate sample was immersed in distilled water at 80°C for a predetermined period of time, and the recovered sample was set on a tensile tester. Measurement of adhesion strength was conducted by peeling the aluminum foil at an angle of 180° and at a speed of 100 mm/min.

(ii) Adhesion to aluminum:

A film (50 μm in thickness) of a silane-modified ethylene copolymer that had been extruded from an extruder (20 mm in diameter) through a T die (200 mm in width) at 200°C was held between two aluminum foils each having a thickness of 40 μm (a product of Sumikei Aluminum Foil Co., Ltd.). The individual layers were heat-sealed at a pressure of 2.94 bar (3 kg/cm$^2$)G for 0.3 second to prepare a laminate sample.

The laminate sample was cut into a long strip state of 1 cm in width using a cutter and then set on a tensile tester. Measurement of adhesion strength was conducted by peeling the aluminum foil at an angle of 180° and at a speed of 100 mm/min.

(iii) Adhesion of polyamide:

A film (50 μm in thickness) of a silane-modified ethylene copolymer that had been extruded from an extruder (20 mm in diameter) through a T die (200 mm in width at 200°C was held between a 100 μm-thick polyamide film (Rayfan $^R$ 1401, a product of Toray Gosei Film Co., Ltd.) and a 40 μm-thick aluminum foil (a product of Sumikei Aluminum Foil Co., Ltd.). The individual layers were heat-sealed at a rpessure of 2.94 bar (3 kg/cm$^2$)G for 3 seconds at 190°C using a heat sealer to prepare a laminate sample. In this sample, the polyamide film was disposed with its corona-treated surface placed in contact with the film of the silane-modified ethylene copolymer.

The laminate sample was cut into a long strip state of 1 cm in width using a cutter and then set on a tensile tester. Measurement of adhesion strength was conducted by peeling the polyamide film at an angle of 180° and at a speed of 100 mm/min.

(iv) Adhesion to polypropylene:

A film (50 μm in thickness) of a silane-modified ethylene copolymer that had been extruded from an extruder (20 mm in diameter through a T die (200 mm in width at 200°C was held between a 50 μm-thick polypropylene film (Sumitomo Noblen® FL 8016, a product of Sumitomo Chemical Co., Ltd.) that had been extruded from an extruder (20 mm in diameter) through a T die (200 mm in width) at 230°C and a 40 μm-thick aluminum foil (a product of Sumikei Aluminum Foil Co., Ltd.). The individual layers were heat-sealed at a pressure of 2.94 bar (3 kg/cm$^2$)G for 3 seconds at 140°C using a heat sealer to prepare a laminate sample.

The laminate sample was cut into a long strip state of 1 cm in width using a cutter and then set on a tensile tester. Measurement of adhesion strength was conducted by peeling the polypropylene film at an angle of 180° at a speed of 100 mm/min.

EXAMPLE 1

One hundred parts by weight of an ethylene/ethyl acrylate/maleic anhydride copolymer (MI: 83 g/10 min., ethyl acrylate content: 5.3 mol%, maleic anhydride content: 0.9 mol%) was dry blended with 0.15 part by weight of dicumyl peroxide and 2.0 parts by weight of triethoxyvinyl silane for 3 minutes in a Henschel mixer.

The resulting blend was subjected to graft copolymerization by extruding from a uniaxial extruder (30 mm in diameter) at a resin temperature of 168°C. The extrusion output was about 2 kg per hour, and the residence time of the copolymer in the extruder was about 2.5 minutes.

The resulting graft copolymer had an MI of 11 g/10 min. The adhesion of this graft copolymer to a variety of substrates was evaluated by the methods and under the conditions as described above. The results are shown in Table 1.

EXAMPLES 2 TO 5 AND COMPARATIVE EXAMPLES 1 TO 3

Graft copolymers were prepared in the same manner as in Example 1 with the types and compositions of the ethylene copolymer, the trialkoxyvinyl silane, and the peroxide catalyst being changed to those indicated in Table 1. The adhesion of each of the graft copolymers to a variety of substrates was evaluated by the same methods and under the conditions as described above. The results are also shown in Table 1.

EP 0 311 722 B1

## T A B L E 1

| | Ethylene copolymer | | Trialkoxy-vinyl silane | | Peroxide | | Resin temperature at modification (°C) | Adhesion strength to glass Time of immersion in hot water at 80°C (hr) | | | | | | Adhesion strength | | |
|---|---|---|---|---|---|---|---|---|---|---|---|---|---|---|---|---|
| | Type | Amount (wt. part) | Type | Amount (wt. part) | Type | Amount (wt. part) | | 0 (kg/cm) | 1 (kg/cm) | 3 (kg/cm) | 6 (kg/cm) | 12 (kg/cm) | 24 (kg/cm) | Alumi-num (kg/cm) | Poly-amide (kg/cm) | Polypro-pylene (kg/cm) |
| Example 1 | A[1) | 100 | D[4) | 2.0 | F[6) | 0.15 | 168 | 0.93 | -- | 1.01 | 0.96 | 0.90 | 0.87 | 0.87 | 0.71 | 0.47 |
| Example 2 | A | 100 | D | 3.0 | F | 0.2 | 171 | 1.10 | -- | 1.02 | 1.13 | 1.10 | 0.98 | 0.90 | 0.63 | 0.50 |
| Example 3 | A | 100 | D | 3.0 | G[7) | 0.3 | 170 | 0.90 | -- | 0.95 | 0.89 | 0.78 | 0.81 | 0.89 | 0.75 | 0.45 |
| Example 4 | A | 100 | E[5) | 2.0 | F | 0.2 | 169 | 1.03 | -- | 1.27 | 0.98 | 1.03 | 0.95 | 0.96 | 0.73 | 0.51 |
| Example 5 | B[2) | 100 | D | 2.0 | F | 0.15 | 167 | 0.87 | -- | 0.94 | 0.91 | 0.85 | 0.86 | 0.85 | 0.66 | 0.44 |
| Comp. Example 1 | A | 100 | - | - | - | - | - | 0.82 | 0.90 | 0 | - | - | - | 0.88 | 0.67 | 0.53 |
| Comp. Example 2 | A | 100 | D | 2.0 | - | - | 168 | 0.93 | 0.76 | 0 | - | -- | - | 0.83 | 0.72 | 0.46 |
| Comp. Example 3 | C[3) | 100 | D | 2.0 | F | 0.2 | 172 | 1.05 | -- | 1.16 | 0.99 | 1.10 | 1.07 | 0.14 | 0.10 | 0.08 |

1): Ethylene/ethyl acrylate/maleic anhydride copolymer (MI: 83 g/10 min., ethyl acrylate content: 5.3 mol%, maleic anhydride content: 0.9 mol%)

2): Ethylene/ethyl acrylate/maleic anhydride copolymer (MI: 190 g/10 min., ethyl acrylate content: 2.1 mol%, maleic anhydride content: 0.9 mol%)

3): Ethylene/vinyl acetate copolymer (MI: 21 g/10 min., vinyl acetate content: 6.7 mol%)

4): Triethoxyvinyl silane (a reagent grade produced by Tokyo Kasei K.K.)

5): Trimethoxyvinyl silane (a reagent grade produced by Tokyo Kasei K.K.)

6): Dicumyl peroxide (a product of Nippon Oils & Fats Co., Ltd.)

7): α,α'-Bis(t-butylperoxy-m-isopropyl)benzene (a product of Nippon Oils & Fats Co., Ltd.)

As is understood from the foregoing, the present invention provides a silane-modified ethylene copolymer that is superior to the prior art products in terms of adhesion to metals, glass, polar high-molecular weight materials, or polyolefins. This copolymer has an additional advantage of exhibiting excellent maintenance of water-resistant adhesion to glass. The present invention also provides a process for producing a silane-modified ethylene copolymer and an adhesive comprising the same.

**Claims**

1. A silane-modified ethylene copolymer, prepared by graft copolymerizing from 0.1 to 10 parts by weight of a trialkoxyvinyl silane to 100 parts by weight of an ethylene copolymer in the presence of a peroxide catalyst, characterized in that the said ethylene copolymer contains from 0 to 15 mol % of a (meth)-acrylic acid ester unit and from 0.2 to 3 mol % of a maleic anhydride unit.

2. A silane-modified ethylene copolymer according to claim 1, characterized in that said trialkoxyvinyl silane is trimethoxyvinyl silane and/or triethoxyvinyl silane.

3. A process for producing a silane-modified ethylene copolymer according to one of claims 1 and 2, comprising melt mixing 100 parts by weight of the said ethylene copolymer with from 0.1 to 10 parts by weight of a trialkoxyvinyl silane in the presence of a peroxide catalyst at a temperature at least 20°C higher than the melting point of said ethylene copolymer.

4. An adhesive comprising a silane-modified ethylene copolymer according to one of claims 1 and 2.

**Revendications**

1. Copolymère d'éthylène modifié par un silane, préparé par copolymérisation par greffage de 0,1 à 10 parties en poids d'un trialcoxysilane sur 100 parties en poids d'un copolymère d'éthylène en présence d'un peroxyde comme catalyseur, caractérisé en ce que ledit copolymère d'éthylène contient de 0 à 15% en moles de motifs ester de l'acide (méth)acrylique et de 0,2 à 3% en moles de motifs anhydride maleique.

2. Copolymère d'éthylène modifié par un silane selon la revendication 1, caractérisé en ce que ledit trialcoxysilane est le triméthoxyvinylsilane et/ou le triéthoxyvinylsilane.

3. Procédé de production d'un copolymère d'éthylène modifié par un silane selon l'une des revendications 1 et 2, comprenant le mélange à l'état fondu de 100 parties en poids dudit copolymère d'éthylène avec de 0,1 à 10 parties en poids d'un trialcoxyvinylsilane en présence d'un peroxyde comme catalyseur, à une température supérieure d'au moins 20°C au point de fusion dudit copolymère d'éthylène.

4. Adhésif comprenant un copolymère d'éthylène modifié par un silane selon l'une des revendications 1 et 2.

**Patentansprüche**

1. Silan-modifiziertes Ethylen-Copolymer, das hergestellt wird durch Propf-Copolymerisieren von 0,1 bis 10 Gewichtsteilen eines Trialkoxyvinylsilans zu 100 Gewichtsteilen eines Ethylencopolymers in Gegenwart eines Peroxid-Katalysators, dadurch gekennzeichnet, daß das Ethylen-Copolymer 0 bis 15 Mol-% einer (Meth)acrylsäureester-Einheit und 0,2 bis 3 Mol-% einer Maleinsäureanhydrid-Einheit enthält.

2. Silan-modifiziertes Ethylen-Copolymer nach Anspruch 1, dadurch gekennzeichnet, daß besagtes Trialkoxyvinylsilan Trimethoxyvinylsilan und/oder Triethoxyvinylsilan ist.

3. Verfahren zur Herstellung eines Silan-modifizierten Ethylen-Copolymers nach einem der Ansprüche 1 oder 2, umfassend das Schmelzmischen von 100 Gewichtsteilen des Ethylen-Copolymers mit 0,1 bis 10 Gewichtsteilen eines Trialkoxyvinylsilans in Gegenwart eines Peroxid-Katalysators bei einer Temperatur, die wenigstens 20°C über dem Schmelzpunkt des Ethylencopolymers liegt.

4. Klebstoff, der ein Silan-modifiziertes Ethylen-Copolymer nach einem der Ansprüche 1 und 2 umfaßt.